Europäisches Patentamt

(19) European Patent Office

Office européen des brevets

(11) Numéro de publication: **0 046 436 B1**

(12) **FASCICULE DE BREVET EUROPEEN**

(45) Date de publication du fascicule du brevet: 23.01.85

(51) Int. Cl.⁴: **F 16 F 1/12,** B 61 F 5/00, B 60 G 11/16

(21) Numéro de dépôt: 81401302.5

(22) Date de dépôt: 13.08.81

(54) Elément élastique à ressort hélicoïdal.

(30) Priorité: 19.08.80 FR 8018123

(43) Date de publication de la demande: 24.02.82 Bulletin 82/8

(45) Mention de la délivrance du brevet: 23.01.85 Bulletin 85/4

(84) Etats contractants désignés: AT BE CH DE FR GB IT LI LU NL SE

(56) Documents cités:
DE - A - 2 942 135
DE - B - 1 199 061
FR - A - 995 091
FR - A - 2 318 349
FR - A - 2 333 162
FR - A - 2 379 731
FR - A - 2 463 327
GB - A - 192 578
LU - A - 47 738

(73) Titulaire: **CREUSOT-LOIRE, 15, rue Pasquier, F-75383 Paris Cedex 08 (FR)**

(72) Inventeur: **Nast, Jean-Daniel, Vallée du Mesvrin St Symphorien de Marmagne, F-71710 Montcenis (FR)**

(74) Mandataire: **Dupuy, Louis et al, CREUSOT-LOIRE 15 rue Pasquier, F-75383 Paris Cedex 8 (FR)**

BUNDESDRUCKEREI BERLIN

## Description

La présente invention se rapport à un élément élastique composé d'un ressort à boudin hélicoïdal de compression et de deux semelles d'appui. Cet élément élastique peut notamment être utilisé pour les suspensions verticales de bogies ferroviaires. Un ressort à boudin ou en hélice classique est monté entre deux semelles d'appui planes et perpendiculaires à l'axe du ressort.

Il n'est pas possible de comprimer un ressort hélicoïdal à pas constant et à section uniforme de bout en bout, entre ses semelles d'appui, sans engendrer une flexion et une réaction de chasse horizontale.

Sur certains ressorts, les bouts du fil sont usinés (par meulage) du côté extérieur de manière que les faces d'appui des deux spires extrêmes soient sensiblement contenues dans deux plans perpendiculaires à l'axe longitudinal. De ce fait, la section du fil diminue à proximité des deux bouts du fil formant le ressort. Le changement de section du fil entraine des contraintes importantes dans les zones d'appui du ressort.

Sur d'autres ressorts, les spires extrêmes sont rapprochées, le pas aux extrémités étant plus faible que le pas au milieu du ressort. Chacune des spires extrêmes est faiblement inclinée par rapport à un plan perpendiculaire à l'axe longitudinal du ressort, ce qui favorise l'appui. Souvent le rapprochement des spires extrêmes (pas variable) est combiné à l'usinage des bouts du fil (section variable). Dans les ressort à pas variable, la diminution du pas vers extrémités tend à rapprocher la spire d'appui et la première spire active pendant les compressions et les spires peuvent même venir en contact les unes contre les autres. Ce changement de pas complique la fabrication et entraîne des inconvénients à l'utilisation.

Le ressort du FR-A-2 333 162 a ses extrémités fixées rigidement dans les coupelles, le pas des spires extrêmes étant plus grand que le pas de la partie centrale. Cette Conception entraine des sollicitations et favorise la transmission des vibrations.

Dans le FR-A-995 091 les spires extrêmes du ressort sont vissées dans des filetages ménages sur des embouts. Les spires extrêmes ne sont pas libres ce qui entraine des sollicitations, favorise la transmission des vibrations et ne permet pas de conserver un pas constant.

La présente invention a pour objet un élément élastique procurant une raideur verticale linéaire possédant de bonnes caractéristiques de chasse (de faible intensité et rotation faible) et conduisant à une diminution des contraintes dans la zone d'appui du ressort. Cette amélioration est due au fait qu'il n'y a pas de modification de pas et qu'il n'y a pas de changement de section du fil constituant la spire d'appui. Le pas étant constant de bout, le contact entre la spire d'appui et la première spire active est écité. La conception de ce ressort est avantageuse du point de vue du filtrage des vibrations. Les flexibilités verticale et transversale obtenues avec ce ressort à pas constant sont sensiblement identiques à celles d'un ressort à spires meulées pour une même définition de la partie utile du ressort. La fabrication de ce ressort ne nécessite pas de changement de pas lors de l'enroulement et elle évite le meulage des spires extrêmes. On obtient par un gain de temps de fabrication et de matière.

L'élément élastique selon l'invention comprend un ressort hélicoïdal constitué par un fil métallique présentant un pas constant et une section droite constante de bout, des spires extrêmes étant engagées sur des surfaces d'appui hélicoïdales d'une semelle d'appui présentant une butée verticale contre laquelle s'appuie le bout du fil et il caractérisé par le fait que les spires extrêmes s'appuient librement sur les dites surfaces d'appui hélicoïdales des dites semelles.

Selon une caractéristique de l'invention, le pas de la surface d'appui hélicoïdale de chaque semelle est plus petit que le pas du ressort.

L'invention va maintenant être décrite avec plus de détails en se référant à un mode de réalisation donné à titre d'exemple et représenté par les dessins annexés.

La figure 1 est une vue en élévation de l'élément élastique conforme à l'invention.

La figure 2 est une coupe selon A-A de la figure 1.

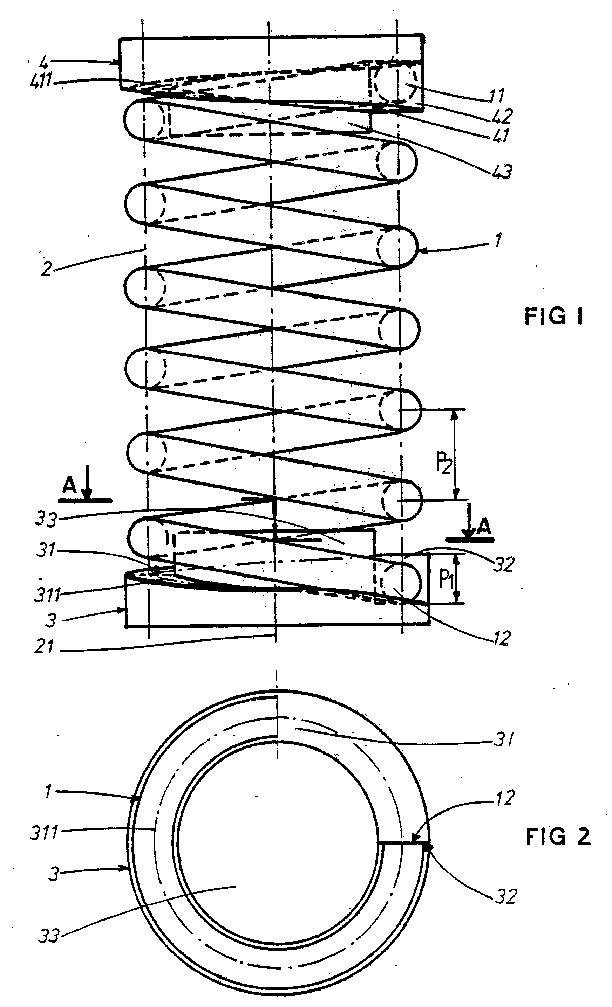

L'élément représenté par les figures 1 et 2 comprend un ressort métallique à boudin ou en hélice 1 dont le fil est enroulé en hélice sur un cylindre 2 dont l'axe longitudinal est repéré 21. Le fil constituant le ressort a une section constante de bout en bout, de la facette supérieure 11 (section droite perpendiculaire à la fibre neutre) du bout supérieur du fil jusqu'à la facette inférieure 12 (section droite perpendiculaire à la fibre neutre) du bout inférieur du fil. Le pas de l'hélice du fil est constant de bout en bout, de la facette supérieure 11 à la facette inférieure 12. La courbure du fil constituant le ressort est continue de bout en bout, de la facette 11 à la facette 12. Le ressort est monté entre une semelle inférieure 3 et une semelle supérieure 4. Chaque semelle 3 ou 4 est pourvue du côté du ressort d'une face d'une face d'appui 31 ou 41 hélicoïdale. Chaque surface d'appui comporte une directrice hélicoïdale telle que 311 formant une hélice dans le cylindre 2 ayant pour axe 21.

Dans le mode de réalisation qui est représenté par le dessin, chaque surface d'appui hélicoïdale est engendrée par une droite perpendiculaire à l'axe longitudinal 21 du ressort et passant par cet axe et s'appuyant sur la directrice hélicoïdale définie précédemment de même sens que l'hélice du ressort. Chaque surface d'appui 31 ou 41 se développe sur 360°, de part et d'autre d'une butée de décrochement 32 ou 42 qui est contenue dans un plan vertical passant par l'axe 21 du ressort. La hauteur de cette butée, mesurée parallèlement à l'axe 21, correspond au pas de l'hélice de la directrice 311 ou 411.

La surface d'appui 31 ou 41 fait office d'appui uniquement dans un sens. Le ressort est libre de ses débattements d'un bout à l'autre c'est-à-dire à partir de chaque facette 11 ou 12, les spires extrêmes n'étant pas emprisonnées dans les semelles. Les faces d'appui 31 ou 41 se font face. La zone de contact de chaque spire extrême sur la surface d'appui 31 ou 41 est positionnée sur la ligne helicoïdale 311 ou 411 qui est enroulée sur le cylindre 2 correspondant au diamètre moyen du ressort. L'intervalle hélicoïdal développé entre le fil d'acier, a partir de la facette 11 ou 12 selon le cylindre 2 est libre de manière à permettre les débattements du ressort.

La surface d'appui peut constituer une cuvette ou un canal concave ayant pour enveloppe un cylindre ayant un diamètre approximativement égal à celui du diamètre du fil, et enroulé autour de 21, selon une hélice telle que 311 ou 411. De cette manière les surfaces d'appui peuvent épouser la forme circulaire des spires du fil constituant le ressort.

Le pas p1 de l'hélice 311 ou 411 de la surface helicoïdale d'appui est inférieur au pas p2 de l'hélice selon laquelle est enroulé le fil du ressort, p2 étant le pas du ressort sous charge dans la zone utile.

Les semelles d'appui peuvent être métalliques, en élastomère ou ent tout autre matériau synthétique. Le contact entre les semelles et le ressort peut être effectué soit directement soit avec interposition d'un élastomère, ce matériau pouvant être fixé soit sur les semelles soit sur le ressort. On peut également envisager tout autre matériau pour répartir la charge et éviter la corrosion.

La facette circulaire extrême 12 du fil du ressort s'appui contre la butée 32 de la semelle inférieure. De même la facette circulaire extrême 11 du S'appui contre la butée 42 de la semelle supérieure. Le nombre de spires du ressort est sensiblement égal à un nombre entier. Plus précisément, il est préférable que le nombre de spires soit compris entre (n+0,9 à 1,1) spires, n étant un nombre entier. De la sorte, les butées 32 et 42 sont sensiblement dans un même plan contenant l'axe 21. Des noyaux cylindriques 33 et 43 solidaires des semelles servent à guider le ressort.

Le contact du ressort avec chacune des semelles se stabilise sous une charge faible par rapport à la charge de travail. La longueur du contact dépend de la géométrie du ressort, c'est-à-dire du diamètre du fil, diamètre d'enroulement, nombre de spires et nuance de l'acier.

## Revendications

1. Elément élastique comprenant un ressort hélicoïdal (1) constitué par un fil métallique présentant un pas constant et une section droite constante de bout en bout, chaque spire extrême étant engagée sur une surface d'appui hélicoïdale (31, 41) d'une semelle d'appui (3, 4) présentant une butée verticale contre laquelle s'appuie le bout de fil caractérisé par le fait que les spires extrêmes s'appuient librement sur les dites surfaces d'appui hélicoïdales (31, 41) des dites semelles (3, 4).

2. Elément selon la revendication 1, caractérisé par le fait que le pas de la surface d'appui hélicoïdal (31, 41) est plus petit que le pas du ressort sous charge dans la zone utile.

3. Elément selon l'une quelconque des revendications précédentes, caractérisé par le fait que les sections droites (11, 12) des bouts du fil s'appuient contre les butées de décrochement (32, 42).

4. Elément selon l'une quelconque des revendications précédentes, caractérisé par le fait que la surface d'appui a la forme d'une cuvette ayant pour enveloppe un cylindre enroulé hélicoïdalement.

5. Elément selon l'une quelconque des revendications précédentes, caractérisé par le fait que la surface d'appui hélicoïdale (31, 41) est une surface générée par une droite perpendiculaire et concourante à l'axe longitudinal du ressort et s'appuyant sur une hélice (311 dont l'axe (21) est celui du ressort.

6. Elément selon la revendication 3, caractérisé par le fait que la surface d'appui est métallique.

7. Elément selon la revendication 3, caractérisé par le fait que la surface d'appui est en un matériau synthétique du type élastomère.

## Patentansprüche

1. Elastisches Element mit einer Schraubenfeder (1), die aus einem Metalldraht besteht, der von Ende zu Ende eine konstante Steigung- bzw. Windungs-Ganghöhe und einen konstanten Querschnitt aufweist, wobei jeder Endschraubengang mit einer schraubenförmigen Abstützfläche (31, 41) auf einer Abstützplatte (3, 4) in Eingriff steht, die einen vertikalen Anschlag aufweist, gegen den sich das Drahtende abstützt, dadurch gekennzeichnet, daß sich die Endschraubengänge frei auf den schraubenförmigen Abstützflächen (31, 41) der Platten (3, 4) abstützen.

2. Element nach Anspruch 1, dadurch gekennzeichnet, daß die Ganghöhe der schraubenförmigen Abstützfläche (31, 41) geringer ist als die Ganghöhe der belasteten Feder in der Wirkungszone.

3. Element nach einem der vorhergehenden Ansprüche, dadurch gekennzeichnet, daß sich die Querschnitte (11, 12) der Enden des Drahtes gegen die Verschiebungs- bzw. Abweichungs-Anschläge (32, 42) abstützen.

4. Element nach einem der vorhergehenden Ansprüche, dadurch gekennzeichnet, daß die Abstützfläche die Form einer Schale besitzt, deren Mantel von einem schraubenförmig bzw. schraubenlinienförmig aufgewickelten Zylinder gebildet wird.

5. Element nach einem der vorhergehenden Ansprüche, dadurch gekennzeichnet, daß die schraubenförmige Abstützfläche (31, 41) eine Fläche ist, die von einer Geraden erzeugt wird, die senkrechtstehend auf und durch den selben Punkt gehend wie die Längsachse der Feder verläuft und sich auf einer Schraubenlinie (311) abstützt, deren Achse (21) jene der Feder ist.

6. Element nach Anspruch 3, dadurch gekennzeichnet, daß die Abstützfläche aus Metall besteht.

7. Element nach Anspruch 3, dadurch gekennzeichnet, daß die Abstützfläche aus einem synthetischen Material des Typs Elastomer besteht.

**Claims**

1. Resilient element comprising a helical spring (1) consisting of a wire having a constant pitch and a constant cross-section from end to end, each end turn being engaged on a helicoidal support surface (31, 41) of a support end plate (3, 4) having a vertical stop against which the end of the wire bears, characterised by the fact that the end turns are freely supported on the said helicidal support surfaces (31, 41) of the said end plates (3, 4).

2. Element according to claims 1, characterised by the fact that the pitch of the helicoidal support surface (31, 41) is smaller than the pitch of the spring under load in the useful zone.

3. Element according to any of the preceding claims, characterised by the fact that the crosssections (11, 12) of the ends of the wire are supported against the stepped stops (32, 42).

4. Element according to any of the preceding claims, characterised by the fact that the support surface is in the form of a dish having as its envelope a helically wound cylinder.

5. Element according to any of the preceding claims, characterised by the fact that the helicoidal support surface (31, 41) is a surface generated by a straight line perpendicular to and convergent with the longitudinal axis of the spring and bearing against a helix (311) whose axis (21) is that of the spring.

6. Element according to Claim 3, characterised by the fact that support surface is metallic.

7. Element according to Claim 3, characterised by the fact that the support surface is of a synthetic material of the elastomer type.

FIG I

FIG 2